# EUROPEAN PATENT SPECIFICATION

(11) **EP 3 339 793 B1**
(45) Date of publication and mention of the grant of the patent: **19.06.2019**
(21) Application number: 16461579.1
(22) Date of filing: 23.12.2016
(51) Int. Cl.: F28F 9/02

(54) **HEAT-EXCHANGER WITH HEADER WELDED TO THE CORE**
WÄRMETAUSCHER MIT ANGESCHWEISSTEM SAMMLER
ÉCHANGEUR DE CHALEUR AVEC COLLECTEUR SOUDÉ AU CEUR

(43) Date of publication of application: 27.06.2018
(73) Proprietor: Alfa Laval Corporate AB, 221 00 Lund (SE)
(72) Inventor: ANIKIEL, Konrad, 81-611 Gdynia (PL)
(74) Representative: Alfa Laval Attorneys

(56) References cited:
- JP-A- S59 200 197
- JP-A- 2016 205 024
- JP-U- H01 129 591
- US-A- 5 607 259
- US-A1- 2005 034 846
- US-A1- 2011 047 899
- US-A1- 2013 175 014
- Siebel, E.; Schwaigerer, S.: "Ebene Böden mit Entlastungsnut"; "9.3" In: S. Schwaigerer: "Festigkeitsberechnung im Dampfkessel-, Behälter- und Rohrleitungsbau", 1983, Springer Verlag, Berlin, Heidelberg, XP002771598, pages 152-154, * figure 9.16 *

## Description

### TECHNICAL FIELD

This disclosure relates to a heat-exchanger comprising a heat-exchanger core having a first heat-exchange passage for a first working fluid intended to be involved in a heat-exchange process, and a second heat-exchange passage for a second working fluid intended to be involved in the heat-exchange process. The heat-exchanger further comprising a header comprising a duct for conveying working fluid to or from at least one of the first and second heat-exchange passages, wherein the header being welded to the heat-exchanger core along a header-to-core joint. The disclosure also relates to a method for manufacturing such a heat-exchanger. The heat-exchanger is particularly suitable for high pressure environment where a compact design is desired.

### BACKGROUND

It is generally a constant desire to increase robustness and cost efficiency of heat-exchangers. One example of improved heat-exchanger cost efficiency is disclosed in JPS59200197, which shows that a width of a plastically worked tube plate may be shortened and the amount of machining may be reduced by providing a recess portion on the tube plate side. While the known heat-exchanger is satisfactory for its intended use, such heat-exchanger is nonetheless susceptible to improvement in terms of improved robustness and cost efficiency.

### SUMMARY

An object of the present disclosure is to provide a heat-exchanger, and method of manufacturing such a heat-exchanger, having at least partly improvement robustness and/or cost efficiency. This object is achieved by the features of the independent claims.

The disclosure concerns a heat-exchanger comprising a heat-exchanger core having a first heat-exchange passage for a first working fluid intended to be involved in a heat-exchange process, and a second heat-exchange passage for a second working fluid intended to be involved in the heat-exchange process. The heat-exchanger further comprises a header having a duct for conveying working fluid to or from at or from at least one of the first and second heat-exchange passages, wherein the header is welded to the heat-exchanger core along a header-to-core joint. The heat-exchanger core has a groove extending at least partly along the header-to-core joint, wherein a cross-section of the groove has a rounded shape with a depth of the groove larger than half the width of the groove, and wherein a cross section of the groove has a substantially elliptical shape.

The disclosure also concerns a method for manufacturing a heat-exchanger comprising a heat-exchanger core having a plurality of heat-exchange passages and a header for conveying working fluid to or from the plurality of heat-exchange passages. The method comprises providing a heat-exchanger core; machining a groove in the heat-exchanger core at least partly along an intended header-to-core joint, wherein a cross-section of the groove has a rounded shape with a depth of the groove larger than half the width of the groove, and welding the header to the heat-exchanger core to form said header-to-core joint.

By providing a groove extending at least partly along the header-to-core joint, wherein a cross-section of the groove has a rounded shape with a depth of the groove larger than half the width of the groove, several advantages are obtained.

For example, header-to-core joints of a heat-exchanger tend to have high peak stress to the localized bending, and high localized stress is typically detrimental in non-immediate damage mechanisms, such as fatigue, stress corrosion cracking, creep, thermal ratcheting, etc. However, the specific cross-sectional shape of the groove with a rounded shape and a depth of the groove larger than half the width of the groove provides a groove with relatively large internal surface area compared with for example a groove with a circular cross-sectional shape. Increased internal surface enables increased distribution of stress over a larger area, such that significantly lower peak stress values can be obtained. This enables in turn reduced manufacturing cost of the heat-exchanger because other expensive and complex solutions for handling said non-immediate damage mechanisms, such as non-linear material with hardening or weld deposit.

The cross-section of the groove has a substantially elliptical shape, or more specifically a substantially semi elliptical or half elliptical shape. An elliptical shape provides both the desired rounded form of the cross-sectional shape of the groove and the relatively large internal surface area of the groove for beneficial distribution of the stress.

Further advantages are achieved by implementing one or several of the features of the dependent claims.

The header may be attached around a working fluid inlet or outlet surface of the heat-exchanger core, and wherein the groove may be formed in said working fluid inlet or outlet surface. Having the groove formed in the working fluid inlet or outlet surface of the heat-exchanger core enables cost-efficient manufacturing of the core.

A center of the elliptical shape of the groove may be located in a range extending from a position corresponding to 25% of a major radius of the elliptical shape below a plane of said inlet or outlet surface to a position corresponding to 25% of the major radius of the elliptical shape above the plane of said inlet or outlet surface, specifically in a range extending from a position corresponding to 10% of a major radius of the elliptical shape below a plane of said inlet or outlet surface to a position corresponding to 10% of the major radius of the elliptical shape above the plane of said inlet or outlet surface, more specifically wherein a center of the elliptical shape of the groove may substantially coincide with the plane of said inlet or outlet surface. An elliptical cross-sectional shape of the groove is desired but a center of the elliptical cross-sectional shape may be offset upwards or downwards from the plane of said inlet or outlet surface. The exact position may depend on the specific circumstances.

A relationship between a major radius and a minor axis of the elliptical shape may be in the range of 0.6 - 1.5, specifically 0.7 - 1.3, and more specifically 0.9 - 1.1. The cross-section of the groove shall have a depth larger than half the width of the groove for increased internal surface in the groove. Increased groove depth with maintained groove width results in further increased internal surface, but at too large depth in relation to width results in a too small radius within the groove, thereby resulting increased peak stress levels again. Hence, a relationship between a major radius and a minor axis of the elliptical shape in the range of 0.6 - 1.5, specifically 0.7 - 1.3, and more specifically 0.9 - 1.1 is deemed to represent an advantageous selection.

A major radius of the elliptical shape may be in the range of 50% - 150%, specifically 75% - 125%, of a thickness of the header wall. The size of the groove is preferably selected to fit the expected stress levels.

The groove may be formed by machining using metal cutting equipment. This process enables a cost-efficient manufacturing of the core.

The groove may extend along at least 50%, specifically at least 75%, more specifically at least 95% of the total length of the header-to-core joint, and most specifically along the entire length of the header-to-core joint. The stress levels at the header-to-core joint depend on many factors, such as form and size of the header. Depending on the specific design of the header, the length of the groove and the location of the groove may be varied. A groove extending along a part of the total length of the header-to-core joint enables reduced manufacturing cost compared with a groove extending along the entire length of the header-to-core joint. An increased length of the groove, i.e. the groove extending along an increased length of the header-to-core joint, reduces the peak stresses along a larger portion of the header-to-core joint and thus the total peak stresses.

A root surface of the welded header-to-core joint may not protrude above a plane of said inlet or outlet surface. This design enables welding of the header-to-core joint without first removing core material within the area enclosed by the header.

The heat-exchanger core may be made of a plurality of stacked plates arranged parallel to one another and joined to each other, preferably by solid state welding, brazing, or a combination of these two methods. A stacked plate heat-exchanger core can be made very compact and robust, making it advantageous for high-pressure applications.

Each of the first and second heat exchange passages may comprise a plurality of flow conduits extending between a working fluid inlet surface and a working fluid outlet surface of the heat-exchanger core. A distribution of the working fluid into a plurality of flow paths through the heat-exchanger improves heat-exchanger efficiency.

The plurality of flow conduits may be formed by open channels in a side surface of individual stacked plates. Open channels are cost-efficiently manufactured using pressing technique and etching technique of an initially flat plate.

The heat-exchanger may be a diffusion-bonded heat-exchanger. A diffusion-bonded heat-exchanger core can be made very compact and robust, making it advantageous for high-pressure applications.

Each of the working fluid inlet and working fluid outlet surfaces of the first and second heat-exchange passages may comprise an individual header welded thereto. An individual header for each inlet and outlet enables a simple and robust header design.

Further areas of applicability will become apparent from the description provided herein.

### BRIEF DESCRIPTION OF DRAWINGS

In the detailed description below reference is made to the following figure, in which:
Figure 1 shows a perspective view of an example embodiment heat-exchanger,
Figure 2a shows a side view of an example heat-exchanger layout,
Figure 2b shows a side view of a further example heat-exchanger layout,
Figure 2c shows a side view of still a further example heat-exchanger layout,
Figure 3 shows a perspective view of an example embodiment core,
Figure 4 shows a perspective view of an example embodiment core of figure 3,
Figure 5 shows a magnification of a portion of figure 4,
Figure 6 shows a perspective view of a portion of an example embodiment heat-exchanger,
Figure 7 shows a side view of an example embodiment heat-exchanger core,
Figure 8 shows a side view of an example embodiment heat-exchanger core,
Figure 9 shows a side view of an example embodiment heat-exchanger core,
Figure 10 shows a cross-section of an example embodiment groove,
Figure 11 shows a cross-section of an example embodiment groove,
Figure 12 shows a cross-section of an example embodiment groove,
Figure 13 shows a cross-section of an example embodiment groove, and
Figure 14 shows a flow chart of the method.

### DETAILED DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

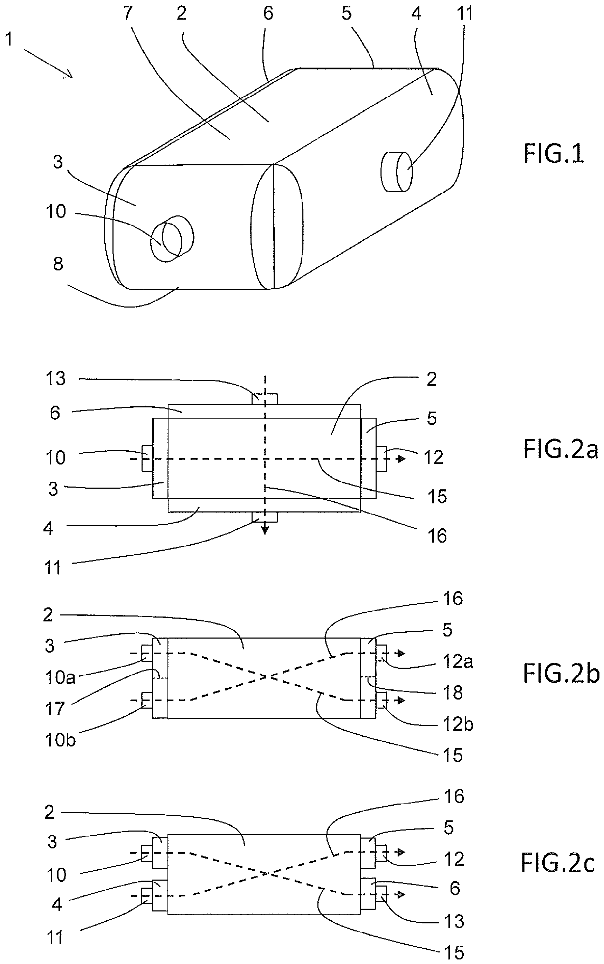

Figure 1 of the drawings schematically shows a perspective view of a heat-exchanger according to an example embodiment of the disclosure. The heat-exchanger 1 comprises a substantially rectangular heat-exchanger core 2 and four headers 3, 4, 5, 6 welded to four individual sides of the core 2, wherein two opposite sides 7, 8 of the core are free from any headers.

The core 2 has a first heat-exchange passage for a first working fluid intended to be involved in a heat-exchange process, and a second heat-exchange passage for a second working fluid intended to be involved in the heat-exchange process. The working fluid may be a refrigerant, natural gas, oil, water, a mixture thereof or any desired and suitable fluid and mixture of fluids. The fluid may also comprise additives. The overall aim of the heat-exchanger is to transfer heat between one working fluid to another working fluid. As a result, the temperature difference between the working fluid when leaving the heat-exchanger is generally lower than the temperature difference between the working fluids when entering the heat-exchanger. Each passage may also be denoted stream.

Each header 3, 4, 5, 6 typically serve to convey working fluid between a fluid inlet connection 10 or fluid outlet connection 11 and a hollow space within the header, which space is defined by the internal side surface of the header and the side of the core on which the header is attached. Consequently, the header forms a duct for enabling working fluid flow between a fluid inlet connection 10 or fluid outlet connection 11 and a plurality of flow conduits extending through the core 2 and ending at the side of the core 2.

Figure 2a schematically illustrates the heat-exchanger 1 of figure 1 as seen from a side 7 without a header. The core 2 is shown as a rectangular-shaped center piece and four headers 3,4,5,6 are shown attached to individual sides of the core 2. Each header 3,4,5,6 comprises a fluid inlet or outlet connection 10,11,12,13.

The heat-exchange passages through the heat-exchanger can vary to a large extent. For example, according to the example embodiment of figure 2a, the heat exchanger has a first heat-exchange passage 15 for a first working extending from a first header 3 on one side of the core 2 to a second header 5 on an opposite side of the core 2, and a second heat-exchange passage 16 for a second working fluid extending from a third header 6 on one side of the core 2 to a fourth header 4 on an opposite side of the core 2, wherein the first and second heat-exchange passages 15, 16 has crossing flow conduits within the core 1. In this example embodiment, each header comprises a single duct for conveying working fluid to or from one of the first and second heat-exchange passages.

Figure 2b shows an alternative example embodiment of a heat-exchanger having only two headers 3, 5 attached to opposite sides of the core 2. Moreover, each header 3, 5 has an internal partition wall 17, 18 defining two ducts within each header 3, 5, and one individual fluid connection 10a, 10b, 12a, 12b associated with each duct. The heat exchanger 1 has a first heat-exchange passage 15 for a first working fluid extending from a first fluid connection 10a, via a first duct of the first header 3 on one side of the core 2 to a second fluid connection 12b, via a second duct of the second header 5 on an opposite side of the core 2. The heat exchanger 1 further has a second heat-exchange passage 16 for a second working fluid extending from a second fluid connection 10b, via a second duct of the first header 3 on one side of the core 2 to a first fluid connection 12a, via a first duct of the second header 5 on an opposite side of the core 2. Here, each header comprises two ducts for conveying working fluids to or from both the first and second heat-exchange passages. The heat-exchanger may thus have a plurality of fluid connections on a single side of the core 2, and the header may have a plurality of ducts conveying different types of working fluid in any direction.

Figure 2c shows still an alternative example embodiment of a heat-exchanger having four headers 3, 4, 5, 6 attached to two opposite sides of the core 2. Each header 3, 4, 5, 6 defines a single duct. The heat exchanger 1 has a first heat-exchange passage 15 for a first working fluid extending from a first fluid connection 10 of a first header 3 on one side of the core 2 to a second fluid connection 13 of a second header 6 on an opposite side of the core 2. The heat exchanger 1 further has a second heat-exchange passage 16 for a second working fluid extending from a third fluid connection 11 of a third header 3 located on the same side as the first header 3 to a fourth fluid connection 12 of a fourth header 5 located on the same side as the second header 6. Here, each header comprises a single duct for conveying working fluids to or from one of the first and second heat-exchange passages.

Many more heat-exchange layouts are possible within the scope of the appended claims, wherein the heat-exchanger comprises at least one header for conveying working fluid to and/or from core.

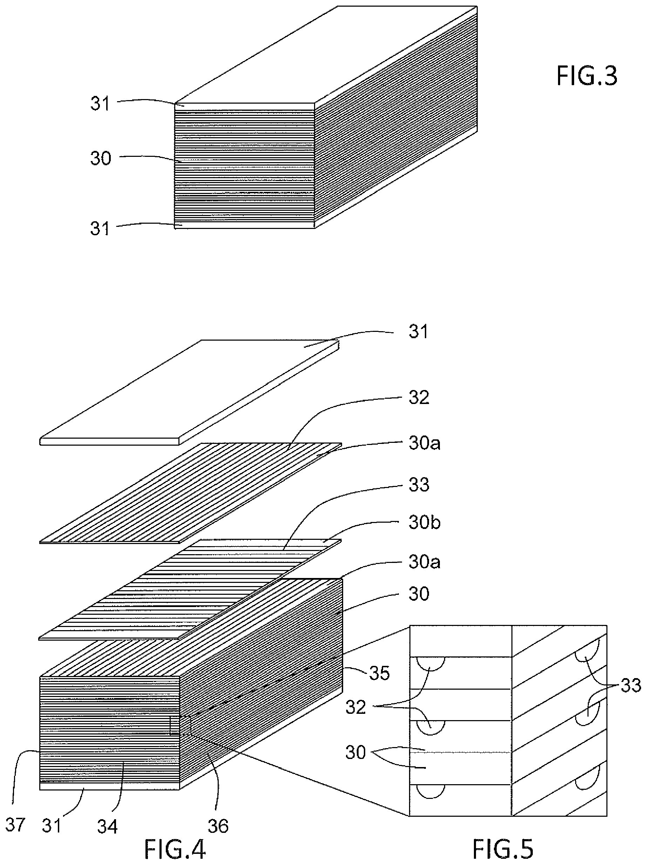

As illustrated in figure 3, the heat-exchanger core 2 may according to an example embodiment of the disclosure be made of a plurality of stacked plates 30 arranged parallel to one another and joined to each other by solid state welding, brazing, or combination of these two methods. Two oppositely arranged endplates 31 form the ends of the stack. The plates 30 are typically made of steel, stainless steel, or a suitable metal alloy. The plates 30 are joined together at their contact surfaces to form a substantially integral single-piece solid metal core that is highly robust and strong. The heat-exchanger core consequently can be said to be manufactured from a plurality of plates, but the finished core more resembles a solid metal block having channels therein.

Diffusion bonding can for example be performed by pressing the plates together in high temperature condition, thereby generating metal grain growth between the upper and lower surfaces of each plate. Alternatively, or on combination with the solid state welding, the plurality of stacked plates 30 arranged parallel to one another may be joined to each other by brazing, which involves placing filler material, for example copper or nickel, between each plate 30 in the stack, and then vacuum-brazing with copper or nickel.

Figure 4 schematically shows the composition of a stack of plates forming the core of an example embodiment heat-exchanger having two different types of plates 30 which are alternatingly placed in the stack. A first group of plates 30a comprises longitudinally extending channels 32 that extend between a first pair of opposite sides 34, 35 of the core 2, and a second group of plates 30b comprises transversely extending channels 33 that extend between a second pair of opposite sides 36, 37 of the core 2. The channels 32 may run substantially straight from one side of the core to an opposite side of the core, as shown in figure 4, but many variations are of course possible, such as curved paths, zig-zag paths, etc.

The channels 32, 33 may for example be formed by chemical etching, which is commonly known as printed circuit heat exchanger (PCHE). Alternatively, channels may be formed in metal plates by means of pressing a plate in a pressing die having projections that form grooves or channels in the plate.

Figure 5 shows a magnified view of a corner section of the example plate stack of figure 4, wherein the plates 30a, 30b of the first and second groups of plates are placed alternatingly. The interaction of neighboring plates form flow conduits through the core, as shown in figure 5, where open channels 32, 33 in one plate interact with the neighboring upper plate to close said open channels and form closed flow conduits. Many alternative designs are possible, such as having an open channel in one plate facing an open channel in a neighboring plate to form a closed flow conduit, or the like.

In the embodiment of fig. 3 and 4, the channels 32, 33 extend all the way to the opposite edges of each plate 30. After stacking of the plates 30 the edges of all plates 30 defines the sides 34, 35, 36, 37 of the core 2, such that the sides of the stack not covered by endplates 31 define inlet or outlet surfaces of the plurality of flow conduits. Consequently, each of the first and second heat exchange passages in the heat-exchanger core 2 of figure 3 and 4 comprises a plurality of flow conduits extending between a working fluid inlet surface and a working fluid outlet surface of the heat-exchanger core 2.

The heat-exchanger is specifically arranged for withstanding very high pressure and high temperature working fluid. For this reason the at least one header of the heat-exchanger 1 is welded to the heat-exchanger core along a header-to-core joint. The header is welded along its entire peripheral contact surface with a side of the core.

Significant stress may arise along the header-to-core joints of a heat-exchanger due to localized bending. One cost-efficient approach for reducing high peak stress at the header-to-core joint is to provide the heat-exchanger core with a groove extending at least partly along the header-to-core joint.

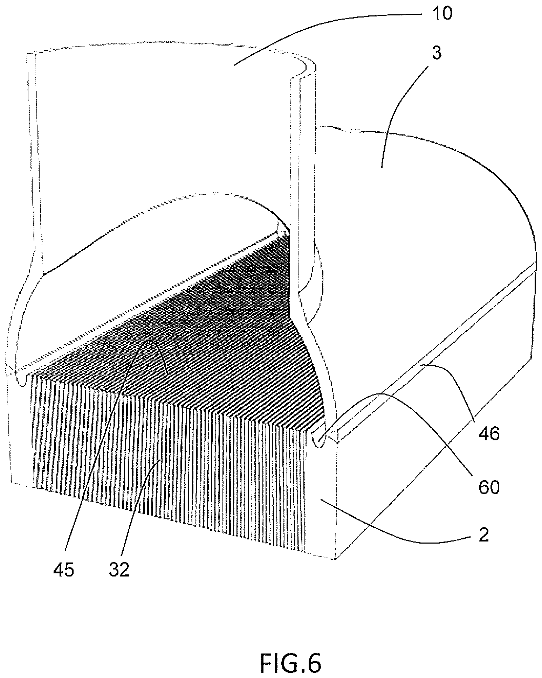

Figure 6 shows a sectional perspective view of a portion of a heat-exchanger according to an example embodiment of the invention. The heat-exchanger comprises a header 3 welded to a core 2 along a header-to-core joint 46, wherein the header 3 comprises a fluid inlet or outlet connection 10. The illustrated core 2 has a plurality of channels 32 extending through the core 2 between a working fluid inlet or outlet surface 45. A groove 60 is formed in the working fluid inlet or outlet surface 45 along the entire header-to-core joint 46. By avoiding sharp corners at the header-to-core joint 46 peak stresses are reduced. Consequently, the cross-section of the groove 60 has a rounded shape instead. Moreover, by selecting a cross-section of the groove 60 having a depth of the groove that is larger than half the width of the groove, a relatively large internal surface is provided within the groove 60, thereby enabling further reduced peak stresses.

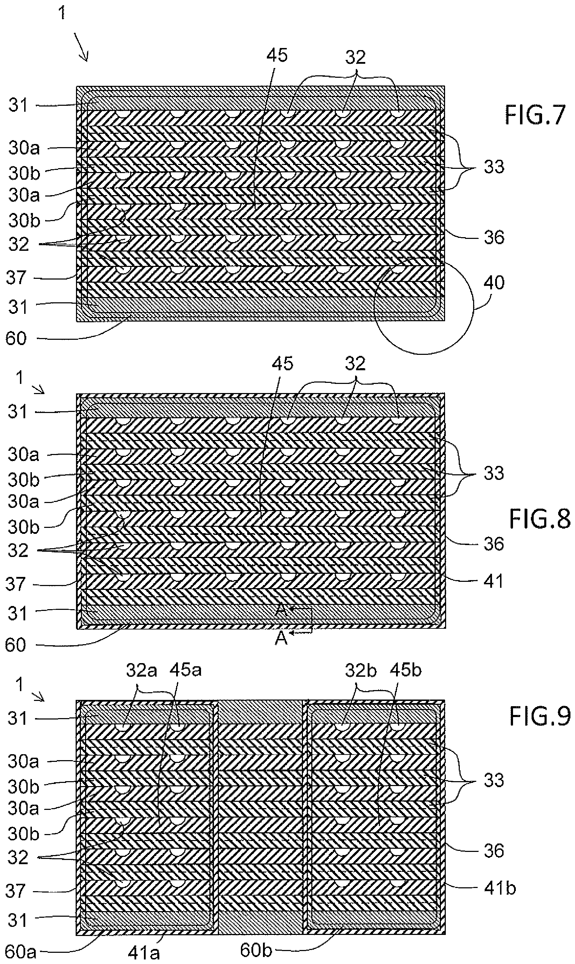

Figure 7 schematically illustrates a side view of an example embodiment of the core 2 having a plurality of alternatingly stacked plates 30a, 30b from a first and second group of plates, and two endplates 31 located on opposite sides of the core 2. A first group of plates 30a have a plurality of channels 32 formed therein, enabling access to the flow conduits from the front side. A second group of plates 30b having a plurality of channels 33 formed therein. The illustrated core surface having opening to the channels 32 defines a working fluid inlet or outlet surface 45 of the heat-exchanger core 2.

At a suitable step in the manufacturing process, after assembly of the plates to a core, the groove is formed along an intended root surface of the welded header-to-core joint. The groove may advantageously be machined using metal cutting equipment, such as milling. In the embodiment of figure 7 the groove extends along the entire length of the intended header-to-core joint, however, shorter segments of groove along the header-to-core joint may be used in certain situation. For example, the groove may possibly be omitted in the corner areas 40 of the header-to-core joint. In all, the groove may extend along at least 50%, specifically at least 75%, more specifically at least 95% of the total length of the header-to-core joint, and most specifically along the entire length of the header-to-core joint. The groove may extend at least at the middle of one of the sides of the header-to-core joint, i.e. in the region halfway between the corner areas 40, and/or at the portions of the header-to-core joint being closest to the inlet or outlet connection 10,11,12,13, where the peak stresses are most significant. Usually, the inlet or outlet connection 10,11,12,13 is located at the center of the header 3,4,5,6 and thus the middle of the side of the header-to-core joint and the portion closest to the inlet or outlet connection is the same. In case of a rectangular inlet or outlet surface, the groove may be present at least at the longsides of the header-to-core joint. On the sides of the header-to-core joint where the groove is present, the groove may extend along a length that is at least equal to a diameter of the inlet or outlet connection.

Figure 8 corresponds to figure 7 but additionally with the root surface 41 of the welded header-to-core joint illustrated as a hatched area. This figure illustrates that the groove is located on an inside of, and substantially flush with, the header-to-core joint. Consequently, in a finished state of the heat-exchanger 1, the header 3, 4, 5, 6 is attached around a working fluid inlet or outlet surface of the heat-exchanger core 2 and the groove 60 is formed in said working fluid inlet or outlet surface 45.

Figure 9 schematically shows an alternative embodiment having substantially identical core structure as the example embodiment of figure 8, but with two working fluid inlet or outlet surfaces 45a, 45b formed in the single shown core surface. Each working fluid inlet or outlet surface 45a, 45b has an individual header attached along a root surface 41a, 41b of a welded header-to-core joint around the working fluid inlet or outlet surface 45a, 45b of the heat-exchanger core 2. This corresponds to a heat exchanger as shown in figure 2c.

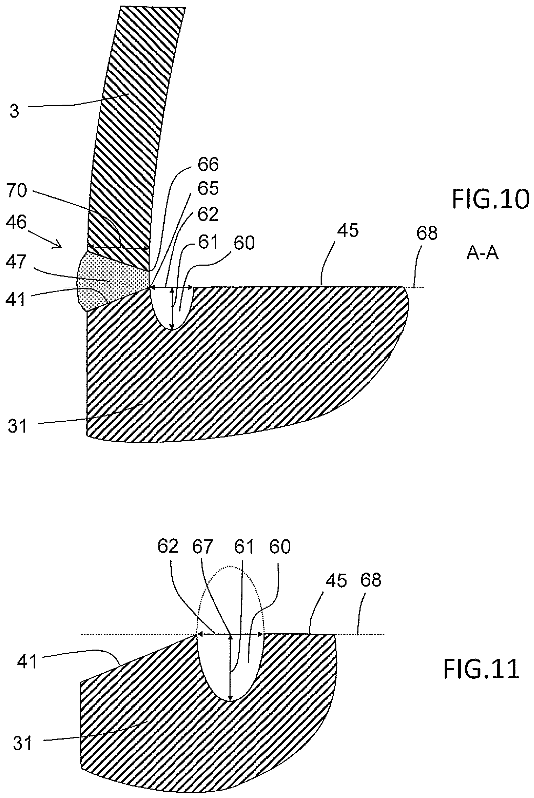

Figure 10 schematically illustrates a section along cut A-A of figure 8 for the purpose of more clearly illustrating the cross-sectional shape of the groove 60 according to the invention, and its position relative to the root surface 41 of the welded header-to-core joint 46. The lower part shown in figure 10 corresponds to an endplate 31 of the core 2, and the upper part corresponds to a side wall of the header 3, which is welded around a working fluid inlet or outlet surface 45 of the heat-exchanger core 2 by means of a weld 47 to form the header-to-core joint 46.

The cross-section of the groove has a rounded shape, i.e. a shape free from sharp corners. The cross-section of the groove has a depth 61 that is larger than half the width 62 of the groove 60. This is advantageous because it provides a groove with relatively large surface area while still avoiding sharp corners. The large surface area results in reduced stress because the stress can be better distributed over the surface, and the sharp corners may result in stress concentration.

According to the invention and illustrated by the example embodiment of figure 10 the cross-section of the groove 60 has a substantially elliptical shape. This means that the groove follows part of a shape resembling an ellipse. In the disclosed example the groove substantially follows half of an ellipse, i.e. having a substantially semi-elliptical shape. The cross-section of the groove 60 may diverge slightly from a pure elliptical shape. For example, the cross-sectional elliptic shape of the groove may approximated by few, such as about 3 to 6 or about 4 to 5 segments (arcs) of a circle, or a b-spline, or a series of curves.

The table below shows the results of simulations made in various types of welded header-to-core joints, wherein the result shows the maximum values of equivalent (van Mises) stress occurring on an internal surface of the header-to-core 46 joint in a transition area between header 3 and core 2. The maximum values of equivalent (van Mises) stress may also be referred to as peak stress.

| Welded header-to-core joint | Maximum equivalent (von Mises) stress |
|---|---|
| Groove-less | 4.0 * 10⁸ Pascal |
| Groove with semi-circular shape | 3.8 * 10⁸ Pascal |
| Groove with semi-elliptical shape | 3.0 * 10⁸ Pascal |

A groove-less header-to-core joint is formed by simply welding the header wall to the flat surface of the core, such that a right-angle corner is formed. The simulation result confirms that a header-to-core joint 46 having a groove 60 with semi-elliptical cross-sectional shape has substantially lower maximal peak stress than a header-to-core joint having a groove 60 with a semi-circular cross-sectional shape. The result is also a strong indicator that a header-to-core joint 46 having a groove 60 with rounded cross-section and a depth 61 of the groove larger than half the width 62 of the groove 60 also exhibits a lower maximal peak stress than a header-to-core joint having a groove 60 with a semi-circular cross-sectional shape.

A relationship between a major radius (depth 61 of groove 60) and a minor axis (width 62 of the groove 60) of the elliptical shape may for example be set in the range of 0.6 - 1.5, specifically 0.7 - 1.3, and more specifically 0.9 - 1.1. The following table of stress simulations of a modelled heat exchanger with a welded header-to-core joint and elliptical groove confirms that a relationship around 1.0 generally may be deemed advantageous (e1=width of groove; e2=depth of groove):

| e1\e2 | 10 | 12 | 14 | 16 | 18 | 20 | 22 | 24 | 26 | 28 | 30 |
|---|---|---|---|---|---|---|---|---|---|---|---|
| 10 | 508,8 | 521,8 | 535 | 556,9 | 574,5 | 575 | 592,3 | 719,1 | 738,3 | 696,4 | 735,4 |
| 12 | 469,9 | 463,4 | 482,7 | 505,7 | 550,4 | 510,3 | 546,1 | 614,7 | 646,7 | 674,9 | 635,1 |
| 14 | 481,4 | 445,9 | 431,4 | 447,9 | 470,2 | 495,1 | 520,2 | 540 | 575,6 | 573,5 | 593,5 |
| 16 | 494,4 | 382 | 382 | 382 | 420,1 | 440,7 | 382 | 483,9 | 382 | 522,6 | 541,2 |
| 18 | 503,4 | 462,6 | 431,3 | 408,2 | 390,1 | 401,5 | 421,4 | 432 | 460,5 | 476,3 | 485,1 |
| 20 | 515,8 | 470,8 | 439,7 | 415,2 | 396,1 | 382 | 382,7 | 403,3 | 412,3 | 422 | 447,2 |
| 22 | 525,4 | 479,4 | 446,7 | 421,2 | 402,7 | 386,7 | 375,2 | 371 | 380,7 | 391,5 | 401,7 |
| 24 | 533,1 | 490 | 454 | 428,5 | 408,1 | 392,3 | 380,4 | 369,4 | 361 | 366,3 | 373,1 |
| 26 | 542 | 498,1 | 462,8 | 435 | 413,5 | 399,1 | 384,3 | 373,5 | 364,4 | 357,3 | 351,1 |
| 28 | 550,2 | 506 | 468,9 | 440,3 | 419,7 | 402,7 | 389,1 | 378,1 | 368,8 | 360,7 | 353,9 |
| 30 | 558,4 | 510,3 | 473,4 | 446,8 | 425,8 | 407,1 | 394 | 382,7 | 372,1 | 364,5 | 358 |

An advantage of simply providing a groove 60 in the working fluid inlet or outlet surface 45 of the heat-exchanger core 2 is that a butt welded header-to-core joint 46 may be accomplished without having to lower the working fluid inlet or outlet surface 45, for example by machining, because the root surface 41 of the welded header-to-core joint 46 does not protrude above a plane of said inlet or outlet surface 45. This means that a butt welded header-to-core joint 46 can be finished merely by means of the groove.

The groove is preferably located so that an outer peripheral edge 65 of the groove 60 substantially coincides with the interior edge 66 of the header wall after assembly and fastening of the header to the core 2 for enabling a flush transition between the header 4 and groove 60.

The depth and width of the groove is preferably selected in accordance with the wall thickness of the header, i.e. the thickness of a wall of the header next to the header-to-core joint. For example, a major radius 61 of the elliptical shape may be set in the range of 50% - 150%, specifically 75% - 125%, of a thickness 70 of the header wall in the area of the header-to-core joint 46. The thickness of the header wall is typically in the range of 5 to 75 millimeters. Thus, alternatively, in terms of absolute numbers, the major radius of the elliptical shape may be set in the range of 2.5 - 112.5 millimeters, specifically in the range of 5 - 100 millimeters, more specifically in the range of 10 - 75 millimeters.

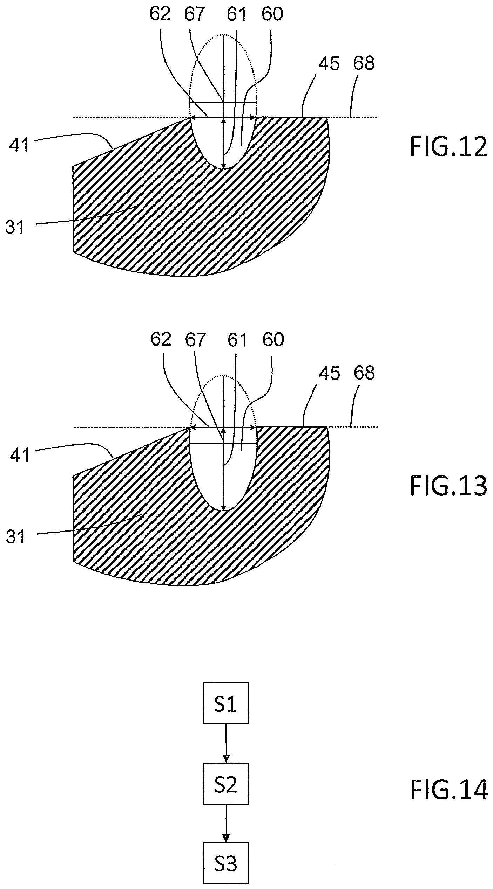

As illustrated in figure 11, a center 67 of the substantially elliptical shape of the groove 60 may according to an example embodiment be set to substantially coincide with a plane 68 of said inlet or outlet surface 45. However, the groove 60 may be made more or less shallow. A more shallow elliptical-shaped groove 60 is shown in the example embodiment of figure 12, wherein the center 67 of the substantially elliptical shape of the groove 60 is located a distance corresponding to about 25% of the major radius of the elliptical shape above the plane 68 of said inlet or outlet surface 45. Moreover, a less shallow elliptical-shaped groove 60 is shown in the example embodiment of figure 13, wherein the center 67 of the substantially elliptical shape of the groove 60 is located a distance corresponding to about 25% of the major radius of the elliptical shape below the plane 68 of said inlet or outlet surface 45. Thus, a center of the elliptical shape of the groove may be located in a range extending from a position corresponding to 25% of a major radius of the elliptical shape below a plane of said inlet or outlet surface to a position corresponding to 25% of the major radius of the elliptical shape above the plane of said inlet or outlet surface, specifically in a range extending from a position corresponding to 10% of a major radius of the elliptical shape below a plane of said inlet or outlet surface to a position corresponding to 10% of the major radius of the elliptical shape above the plane of said inlet or outlet surface.

The disclosure also relates to a method for manufacturing a heat-exchanger 1 comprising a heat-exchanger core 2 having a plurality of heat-exchange passages and a header 3, 4, 5, 6 for conveying working fluid to or from the plurality of heat-exchange passages. The method comprises the following steps S1-S3, which is also illustrated in figure 14. The method comprises:
S1) Providing a heat-exchanger core 2. This may involve manufacturing metal plates 30, 30a, 30b with integral channels 32, 33, for example by chemical etching or pressing, and subsequently joining the plates by solid state welding and/or brazing to form a solid single-piece core having integral flow conduits.
S2) Machining a groove 60 in the heat-exchanger core 2 at least partly along an intended header-to-core joint 46, wherein a cross-section of the groove 60 has a rounded shape with a depth of the groove larger than half the width of the groove. S3) Welding the header 3, 4, 5, 6 to the heat-exchanger core 2 to form said header-to-core joint 46.

Reference signs mentioned in the claims should not be seen as limiting the extent of the matter protected by the claims, and their sole function is to make claims easier to understand.

The present invention may be embodied in other specific forms without departing from its spirit or essential characteristics. It is appreciated that various features of the above-described examples can be mixed and matched to form a variety of other alternatives. As such, the described embodiments are to be considered in all respects only as illustrative and not restrictive. The scope of the invention is, therefore, indicated by the appended claims rather than by the foregoing description. All changes that come within the meaning and range of equivalency of the claims are to be included within their scope.

## Claims

1. A heat-exchanger (1) comprising:
a heat-exchanger core (2) having a first heat-exchange passage for a first working fluid intended to be involved in a heat-exchange process, and a second heat-exchange passage for a second working fluid intended to be involved in the heat-exchange process; and
a header (3, 4, 5, 6) comprising a duct for conveying working fluid to or from at least one of the first and second heat-exchange passages, wherein the header (3, 4, 5, 6) being welded to the heat-exchanger core (2) along a header-to-core joint (46),
wherein the heat-exchanger core (2) has a groove (60, 60a, 60b) extending at least partly along the header-to-core joint (46), wherein a cross-section of the groove (60, 60a, 60b) has a rounded shape
**characterised in that** a depth (61) of the groove (60, 60a, 60b) is larger than half the width (62) of the groove (60, 60a, 60b), and wherein a cross-section of the groove (60) has a substantially elliptical shape.

2. The heat-exchanger according to any of claims 1, wherein the header (3, 4, 5, 6) is attached around a working fluid inlet or outlet surface (45, 45a, 45b) of the heat-exchanger core (2), and wherein the groove (60, 60a, 60b) is formed in said working fluid inlet or outlet surface (45, 45a, 45b).

3. The heat-exchanger according to any of claims 1 to 2, wherein a center (67) of the elliptical shape of the groove (60, 60a, 60b) is located in a range extending from a position corresponding to 25% of a major radius of the elliptical shape below a plane (68) of said inlet or outlet surface (45, 45a, 45b) to a position corresponding to 25% of the major radius of the elliptical shape above the plane (68) of said inlet or outlet surface, specifically wherein a center (67) of the elliptical shape of the groove (60, 60a, 60b) substantially coincides with the plane (68) of said inlet or outlet surface (45, 45a, 45b).

4. The heat-exchanger according to any of claims 1 to 3, wherein a relationship between a major radius and a minor axis of the elliptical shape is in the range of 0.6 - 1.5, specifically 0.7 - 1.3, and more specifically 0.9 - 1.1.

5. The heat-exchanger according to any of claims 1 to 4, wherein a major radius of the elliptical shape is in the range of 50% - 150%, specifically 75% - 125%, of a thickness (70) of the header wall.

6. The heat-exchanger according to any of claims 1 to 5, wherein the groove (60, 60a, 60b) is formed by machining using metal cutting equipment.

7. The heat-exchanger according to any of claims 1 to 6, wherein the groove (60, 60a, 60b) extends along at least 50%, specifically at least 75%, more specifically at least 95% of the total length of the header-to-core joint (46), and most specifically along the entire length of the header-to-core joint (46).

8. The heat-exchanger according to any of claims 2 to 7, wherein a root surface (41) of the welded header-to-core joint (46) does not protrude above a plane (68) of said inlet or outlet surface (45, 45a, 45b).

9. The heat-exchanger according to any of claims 1 to 8, wherein the heat-exchanger core (2) is made of a plurality of stacked plates (30, 30a, 30b) arranged parallel to one another and joined to each other, preferably by solid state welding, brazing, or a combination of these two methods.

10. The heat-exchanger according to any of claims 1-9, wherein each of the first and second heat exchange passages comprises a plurality of flow conduits extending between a working fluid inlet surface (45, 45a, 45b) and a working fluid outlet surface (45, 45a, 45b) of the heat-exchanger core (2).

11. The heat-exchanger according to claim 10, wherein the plurality of flow conduits are formed by open channels (32, 33) in a side surface of individual stacked plates (30, 30a, 30b).

12. The heat-exchanger according to any of claims 1 to 11, wherein the heat-exchanger (1) is a diffusion-bonded heat-exchanger.

13. The heat-exchanger according to any of claims 2 to 12, wherein each of the working fluid inlet and working fluid outlet surfaces (45, 45a, 45b) of the first and second heat-exchange passages comprises an individual header (3, 4, 5, 6) welded thereto.

14. A method for manufacturing a heat-exchanger (1) comprising a heat-exchanger core (2) having a plurality of heat-exchange passages and a header (3, 4, 5, 6) for conveying working fluid to or from the plurality of heat-exchange passages, the method comprises
providing a heat-exchanger core (2);
machining a groove (60, 60a, 60b) in the heat-exchanger core (2) at least partly along an intended header-to-core joint (46), wherein a cross-section of the groove (60, 60a, 60b) has a rounded shape with a depth (61) of the groove (60, 60a, 60b) larger than half the width (62) of the groove (60, 60a, 60b), and wherein a cross-section of the groove (60) has a substantially elliptical shape,
welding the header (3, 4, 5, 6) to the heat-exchanger core (2) to form said header-to-core joint (46).

## Patentansprüche

1. Wärmetauscher (1), umfassend:
einen Wärmetauscherkern (2) mit einem ersten Wärmetauschdurchgang für ein erstes Arbeitsfluid, das für die Einbindung in einen Wärmetauschprozess vorgesehen ist; und einem zweiten Wärmetauschdurchgang für ein zweites Arbeitsfluid, das für die Einbindung in den Wärmetauschprozess vorgesehen ist; und
einen Sammler (3, 4, 5, 6), umfassend ein Rohr zum Transportieren von Arbeitsfluid zu oder von mindestens einem des ersten und zweiten Wärmetauschdurchgangs, wobei der Sammler (3, 4, 5, 6) entlang einer Sammler/Kern-Verbindung (46) an den Wärmetauscherkern (2) geschweißt ist,
wobei der Wärmetauscherkern (2) eine Rille (60, 60a, 60b) aufweist, die mindestens teilweise entlang der Sammler/Kern-Verbindung (46) verläuft, wobei ein Querschnitt der Rille (60, 60a, 60b) eine abgerundete Form aufweist, **dadurch gekennzeichnet, dass** eine Tiefe (61) der Rille (60, 60a, 60b) größer als die Hälfte der Breite (62) der Rille (60, 60a, 60b) ist, und wobei ein Querschnitt der Rille (60) eine im Wesentlichen elliptische Form aufweist.

2. Wärmetauscher nach einem der Ansprüche 1, wobei der Sammler (3, 4, 5, 6) um eine Arbeitsfluideinlass- oder -auslassoberfläche (45, 45a, 45b) des Wärmetauscherkerns (2) angebracht ist und wobei die Rille (60, 60a, 60b) in der Arbeitsfluideinlass- oder - auslassoberfläche (45, 45a, 45b) geformt ist.

3. Wärmetauscher nach einem der Ansprüche 1 bis 2, wobei eine Mitte (67) der elliptischen Form der Rille (60, 60a, 60b) in einem von einer Position, die 25 % eines größeren Radius der elliptischen Form unterhalb einer Ebene (68) der Einlass- oder Auslassoberfläche (45, 45a, 45b) entspricht, zu einer Position, die 25 % des größeren Radius der elliptischen Form oberhalb der Ebene (68) der Einlass- oder Auslassoberfläche entspricht, verlaufenden Bereich liegt, insbesondere wobei eine Mitte (67) der elliptischen Form der Rille (60, 60a, 60b) im Wesentlichen mit der Ebene (68) der Einlass- oder Auslassoberfläche (45, 45a, 45b) übereinstimmt.

4. Wärmetauscher nach einem der Ansprüche 1 bis 3, wobei eine Beziehung zwischen einem größeren Radius und einer kleineren Achse der elliptischen Form im Bereich von 0,6 - 1,5, insbesondere von 0,7 - 1,3 und weiter insbesondere von 0,9 - 1,1 ist.

5. Wärmetauscher nach einem der Ansprüche 1 bis 4, wobei ein größerer Radius der elliptischen Form im Bereich von 50 % - 150 %, insbesondere 75 % bis 125 % einer Dicke (70) der Sammlerwand ist.

6. Wärmetauscher nach einem der Ansprüche 1 bis 5, wobei die Rille (60, 60a, 60b) durch maschinelles Herstellen mithilfe von Metallschnittgeräten geformt wird.

7. Wärmetauscher nach einem der Ansprüche 1 bis 6, wobei die Rille (60, 60a, 60b) entlang mindestens 50 %, insbesondere mindestens 75 %, weiter insbesondere mindestens 95 % der Gesamtlänge der Sammler/Kern-Verbindung (46) und am meisten insbesondere entlang der gesamten Länge der Sammler/Kern-Verbindung (46) verläuft.

8. Wärmetauscher nach einem der Ansprüche 2 bis 7, wobei eine Wurzeloberfläche (41) der geschweißten Sammler/Kern-Verbindung (46) nicht über eine Ebene (68) der Einlass- oder Auslassoberfläche (45, 45a, 45b) vorsteht.

9. Wärmetauscher nach einem der Ansprüche 1 bis 8, wobei der Wärmetauscherkern (2) aus einer Vielzahl gestapelter Platten (30, 30a, 30b) hergestellt ist, die parallel zueinander angeordnet und miteinander verbunden sind, vorzugsweise durch Festkörperschweißen, Löten oder einer Kombination dieser beiden Verfahren.

10. Wärmetauscher nach einem der Ansprüche 1 bis 9, wobei jeder des ersten und zweiten Wärmetauschdurchgangs eine Vielzahl von Strömungsleitungen umfasst, die zwischen einer Arbeitsfluideinlassoberfläche (45, 45a, 45b) und einer Arbeitsfluidauslassoberfläche (45, 45a, 45b) des Wärmetauscherkerns (2) verlaufen.

11. Wärmetauscher nach Anspruch 10, wobei die Vielzahl von Strömungsleitungen durch offene Kanäle (32, 33) in einer Seitenfläche individueller gestapelter Platten (30, 30a, 30b) geformt ist.

12. Wärmetauscher nach einem der Ansprüche 1 bis 11, wobei der Wärmetauscher (1) ein diffusionsgeschweißter Wärmetauscher ist.

13. Wärmetauscher nach einem der Ansprüche 2 bis 12, wobei jede der Arbeitsfluideinlass- und Arbeitsfluidauslassoberflächen (45, 45a, 45b) des ersten und zweiten Wärmetauschdurchgangs einen daran geschweißten individuellen Sammler (3, 4, 5, 6) umfasst.

14. Verfahren zur Herstellung eines Wärmetauschers (1), umfassend einen Wärmetauscherkern (2) mit einer Vielzahl von Wärmetauschdurchgängen und einem Sammler (3, 4, 5, 6) zum Transportieren von Arbeitsfluid zu oder von der Vielzahl von Wärmetauschdurchgängen, wobei das Verfahren umfasst:
Bereitstellen eines Wärmetauscherkerns (2);
maschinelles Herstellen einer Rille (60, 60a, 60b) im Wärmetauscherkern (2) mindestens teilweise entlang einer beabsichtigten Sammler/Kern-Verbindung (46), wobei ein Querschnitt der Rille (60, 60a, 60b) eine abgerundete Form aufweist, wobei eine Tiefe (61) der Rille (60, 60a, 60b) größer als die Hälfte der Breite (62) der Rille (60, 60a, 60b) ist, und wobei ein Querschnitt der Rille (60) eine im Wesentlichen elliptische Form aufweist,
Schweißen des Sammlers (3, 4, 5, 6) an den Wärmetauscherkern (2), um die Sammler/Kern-Verbindung (46) zu formen.

## Revendications

1. Échangeur de chaleur (1) comprenant :
un coeur d'échangeur de chaleur (2) présentant un premier passage d'échange de chaleur pour un premier fluide de travail destiné à être impliqué dans un processus d'échange de chaleur, et un second passage d'échange de chaleur pour un second fluide de travail destiné à être impliqué dans le processus d'échange de chaleur ; et
un collecteur (3, 4, 5, 6) comprenant un conduit permettant de convoyer le fluide de travail vers ou depuis au moins un du premier et du second passages d'échange de chaleur, dans lequel le collecteur (3, 4, 5, 6) est soudé au coeur de l'échangeur de chaleur (2) le long d'un joint de collecteur à coeur (46),
dans lequel le coeur d'échangeur de chaleur (2) présente une cannelure (60, 60a, 60b) s'étendant au moins partiellement le long du joint de collecteur au coeur (46), dans lequel une coupe transversale de la cannelure (60, 60a, 60b) présente une forme arrondie, **caractérisé en ce qu'**une profondeur (61) de la cannelure (60, 60a, 60b) est supérieure à la moitié de la largeur (62) de la cannelure (60, 60a, 60b), et dans lequel une coupe transversale de la cannelure (60) présente une forme sensiblement elliptique.

2. Échangeur de chaleur selon l'une quelconque des revendications 1, dans lequel le collecteur (3, 4, 5, 6) est fixé autour d'une surface d'entrée ou de sortie d'un fluide de travail (45, 45a, 45b) du coeur d'échangeur de chaleur (2), et dans lequel la cannelure (60, 60a, 60b) est formée dans ladite surface d'entrée ou de sortie de fluide de travail (45, 45a, 45b).

3. Échangeur de chaleur selon l'une quelconque des revendications 1 à 2, dans lequel un centre (67) de la forme elliptique de la cannelure (60, 60a, 60b) est situé dans une plage s'étendant depuis une position correspondant à 25 % d'un rayon majeur de la forme elliptique sous un plan (68) de ladite surface d'entrée ou sortie (45, 45a, 45b) vers une position correspondant à 25 % du rayon majeur de la forme elliptique au-dessus du plan (68) de ladite surface d'entrée ou de sortie, spécifiquement dans lequel un centre (67) de la forme elliptique de la cannelure (60, 60a, 60b) coïncide sensiblement avec le plan (68) de ladite surface d'entrée ou de sortie (45, 45a, 45b).

4. Échangeur de chaleur selon l'une quelconque des revendications 1 à 3, dans lequel une relation entre un rayon majeur et un axe mineur de la forme elliptique est comprise dans la plage de 0,6 à 1,5, spécifiquement de 0,7 à 1,3, et plus spécifiquement de 0,9 à 1,1.

5. Échangeur de chaleur selon l'une quelconque des revendications 1 à 4, dans lequel un rayon majeur de la forme elliptique est compris dans la plage de 50 % à 150 %, spécifiquement 75 % à 125 % d'une épaisseur (70) de la paroi de collecteur.

6. Échangeur de chaleur selon l'une quelconque des revendications 1 à 5, dans lequel la cannelure (60, 60a, 60b) est formée par un usinage en utilisant un équipement de coupe métallique.

7. Échangeur de chaleur selon l'une quelconque des revendications 1 à 6, dans lequel la cannelure (60, 60a, 60b) s'étend le long d'au moins 50 %, spécifiquement au moins 75 %, plus spécifiquement au moins 95 % de la longueur totale du joint du collecteur au coeur (46), et plus spécifiquement, le long de toute la longueur du joint du collecteur au coeur (46).

8. Échangeur de chaleur selon l'une quelconque des revendications 2 à 7, dans lequel une surface de base (41) du joint de collecteur au coeur soudé (46) ne ressort pas au-dessus d'un plan (68) de ladite surface d'entrée ou sortie (45, 45a, 45b).

9. Échangeur de chaleur selon l'une quelconque des revendications 1 à 8, dans lequel le coeur de l'échangeur de chaleur (2) est constitué d'une pluralité de plaques empilées (30, 30a, 30b) disposées parallèlement l'une à l'autre et jointes les unes aux autres, de préférence par un soudage à l'état solide, un brasage, ou une combinaison de ces deux procédés.

10. Échangeur de chaleur selon l'une quelconque des revendications 1 à 9, dans lequel chacun du premier et du second passages d'échange de chaleur comprend une pluralité de conduits d'écoulement s'étendant entre une surface d'entrée de fluide de travail (45, 45a, 45b) et une surface de sortie de fluide de travail (45, 45a, 45b) du coeur d'échangeur de chaleur (2).

11. Échangeur de chaleur selon la revendication 10, dans lequel la pluralité de conduits d'écoulement est constituée de canaux ouverts (32, 33) dans une surface latérale de plaques empilées individuelles (30, 30a, 30b).

12. Échangeur de chaleur selon l'une quelconque des revendications 1 à 11, dans lequel l'échangeur de chaleur (1) est un échangeur de chaleur collé par diffusion.

13. Échangeur de chaleur selon l'une quelconque des revendications 2 à 12, dans lequel chacune des surfaces d'entrée de fluide de travail et de sortie de fluide de travail (45, 45a, 45b) du premier et du second passages d'échange de chaleur comprend un collecteur individuel (3, 4, 5, 6) qui y est soudé.

14. Procédé de fabrication d'un échangeur de chaleur (1) comprenant un coeur d'échangeur de chaleur (2) présentant une pluralité de passages d'échange de chaleur et un collecteur (3, 4, 5, 6) permettant de convoyer un fluide de travail vers ou depuis la pluralité de passages d'échange de chaleur, le procédé comprenant
la fourniture d'un coeur d'échangeur de chaleur (2) ;
l'usinage d'une cannelure (60, 60a, 60b) dans le coeur d'échangeur de chaleur (2) au moins partiellement le long d'un joint de collecteur à coeur prévu (46), dans lequel une coupe transversale de la cannelure (60, 60a, 60b) présente une forme arrondie avec une profondeur (61) de la cannelure (60, 60a, 60b) supérieure à la moitié de la largeur (62) de la cannelure (60, 60a, 60b), et dans lequel une coupe transversale de la cannelure (60) présente une forme sensiblement elliptique,
le soudage du collecteur (3, 4, 5, 6) au coeur d'échangeur de chaleur (2) afin de former ledit joint de collecteur à coeur (46).
